# EUROPEAN PATENT SPECIFICATION

(11) **EP 1 715 412 B1**
(45) Date of publication and mention of the grant of the patent: **31.10.2007**
(21) Application number: 05103043.5
(22) Date of filing: 18.04.2005
(51) Int. Cl.: G06F 9/44, G06F 17/22, H04L 29/06, G06F 17/30

(54) **System and method for simplification of data structure in wireless communications**
System und Methode zur Vereinfachung einer Datenstruktur in drahtlosen Kommunikationen
Système et méthode pour la simplification d'une structure de données dans des communications sans fil

(43) Date of publication of application: 25.10.2006
(73) Proprietor: Research In Motion Limited, Waterloo, Ontario N2L 3W8 (CA)
(72) Inventor: DeBruin, David, Guelph, Ontario N1E 4E7 (CA); Bibr, Viera, Kilbride, Ontario L0P 1G0 (CA); Fritsch, Brindusa, Toronto, Ontario M9C 2J9 (CA); Shenfield, Michael, Richmond Hill, Ontario L4C 3S9 (CA); Goring, Bryan R., Milton, Ontario L9T 5V4 (CA)
(74) Representative: Rickard, David John

(56) References cited:
- WO-A-02/19154
- WO-A-20/04059939
- US-A- 6 085 196
- US-A- 6 128 612
- US-A1- 2002 156 896
- US-A1- 2002 184 213
- US-A1- 2004 078 424

## Description

This application relates generally to wireless communications and wireless communications devices and, in particular, to a method and apparatus for simplification of data structure in wireless communications.

The acceptance of wireless devices as a preferred personal communications medium has created a growing demand for such devices. Users of such devices also increasingly expect more functionality and a broader range of services to be made available through such devices. Not only is there a demand for more functionality, there is also a demand for faster response times and more efficient access to remote services.

A major challenge is faced in exposing wireless devices to complex data sources, such as web services, due to the size and complexity of the data structures communicated from such sources. In wired networks and devices where resources and efficiency are not a significant concern, it is permissible to transmit, process and store large and complex data structures.

Complex data structures containing many levels of nesting introduce a significant memory overhead on wireless devices. This impacts performance when accessing such data in a memory store.

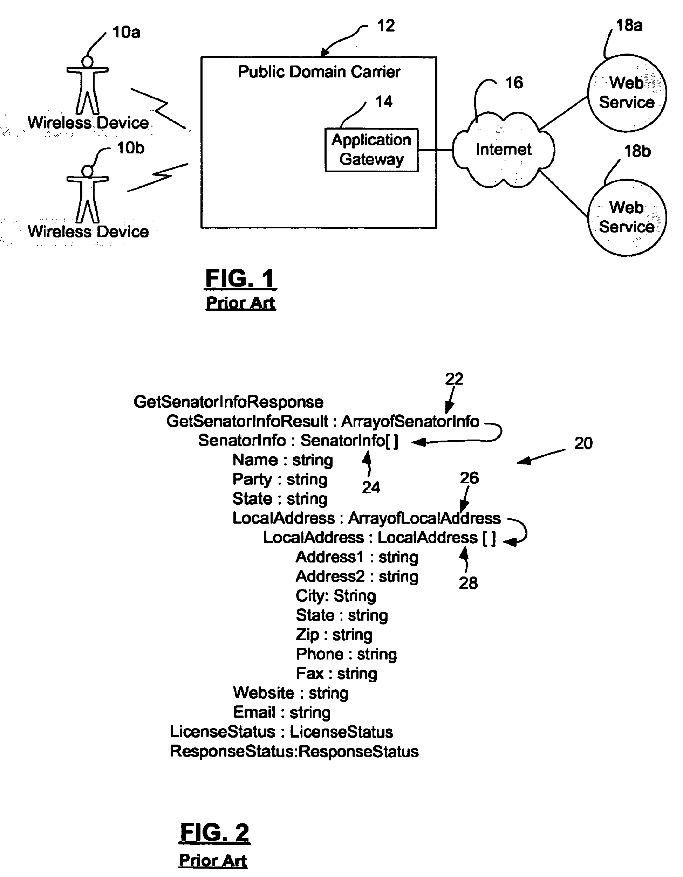

Fig. 1 is a block diagram of a prior art network in which wireless device users 10a, 10b operate wireless devices to send web service request messages via a public domain carrier 12 to an application gateway 14. The application gateway 14 forwards the web service request messages through the internet 16 to an appropriate web service 18a, 18b. The messages are processed by the appropriate web service 18a, 18b and returned through the internet 16 to the application gateway 14. The public domain carrier 12 forwards the response messages to the wireless device 10a, 10b which processes the response and displays response content to the wireless device users 10a, 10b.

FIG. 2 is a schematic diagram of an exemplary web service data structure 28 in accordance with the prior art. FIG. 2 schematically represents an exemplary complex data structure 20 named "GetSenatorInfoResponse". The complex data structure 20 contains a referring field 22 named "GetSenatorInfoResult" having a field type of "ArrayofSenatorInfo". The referring field 22 refers to a data component 24 that contains a single field "SenatorInfo" having a field type of array. Likewise, the referring field 26, refers to a candidate data component 28 "LocalAddress" having a field type of "ArrayofLocalAddress"). As will be appreciated by those skilled in the art, this complex data structure requires significant computing resources to store the structure in memory or retrieve it from memory at a rate that is acceptable to most users. Since wireless devices 10a, 10b also have limited available data transfer capacity commonly referred to as "bandwidth", they generally cannot send and receive complex data structures at a rate that is considered acceptable to most users.

Consequently, there exists a need for a system and method that provides data and message optimization in order to ensure that wireless device response time and wireless messaging efficiency can keep up with demand, and that wireless device users remain satisfied with the performance of their wireless devices.

US6085196 discloses a system and method for simplification of a data structure in wireless communications messages. The system comprises a developer toolkit comprising computer executable code for accepting as input a service message containing complex data structures with multiple levels of nesting and outputting a simplified service message containing simplified data structures which contain fewer levels of nesting, and further outputting a message map for transforming the simplified service message to the complex service message, and vice versa; wherein the computer executable code is arranged to add a path segment to the message map to permit the input service message to be restored from the simplified service message.

WO02/19154 discloses a method of using virtual groups to automatically generate a transform. Mapping rules are applied to meta-data to map data from a field under a virtual group in a source document to corresponding field(s) in a target document. Using virtual groups in concrete documents that have structures that can have multiple meanings allows meta-data of each document to be represented so that each structure has a single meaning. This enables a transform to be automatically generated.

WO04/059939 discloses a system and method in which wireless component applications in mobile communication devices communicate with a web service via a wireless network, the Internet, and optionally a message-map service. Each wireless component application is executed by a component framework on one of the mobile communication devices, and comprises data components, presentation components, message components, and workflow components. The component framework executes the component application in an application container which provides access to framework services which include a communication service, a screen service, a persistence service, an access service, a provisioning service, and a utility service. Messages can be sent from the component application to the message-map service, which converts each of the messages to a format required by the web service using an application message-map, and then sends the message to the web service. The web service sends a response to the message-map service, which converts the response to the format required by the wireless component application, and sends the response to the wireless component application.

### GENERAL

Preferably the invention provides a system and method for simplification of data structures used in wireless devices that promotes efficient data storage, efficient data access and retrieval, and transparent, efficient wireless messaging between wireless devices and remote services, such as worldwide web services.

In accordance with a first aspect, a system of the present invention is characterized over US6085196 in that the computer executable code is arranged to add a path segment to the message map to permit the input service message to be restored from the simplified service message.

In accordance with a further aspect of the present invention, a method of the invention is characterized over that of US6085196 in that it further comprises provisioning the application developer toolkit with computer executable code for adding a path segment to the message map to permit the service message to be restored from the simplified data message.

### BRIEF DESCRIPTION OF THE DRAWINGS

Further features and advantages of the present invention will become apparent from the following detailed description, taken in combination with the appended drawings, in which:
FIG. 1 is a block diagram of a prior art wireless network system;
FIG. 2 is a schematic diagram of an exemplary prior art web service data structure;
FIG. 3 is a schematic diagram illustrating a process for creating and enabling a system in accordance with the invention;
FIG. 4 is a block diagram of a proxy in accordance with the invention;
FIG. 5 is a block diagram of a wireless device in accordance with the invention;
FIG. 6 is a high level overview of messaging between a wireless device and a remote service in a system in accordance with the invention;
FIG. 7 is a flow chart of an algorithm in accordance with the invention for flattening complex data structures; and
FIG. 8 is a schematic representation of the data structure shown in FIG. 2 after it has been flattened using the algorithm shown in FIG. 7.

It will be noted that throughout the appended drawings, like features are identified by like reference numerals.

### DESCRIPTION OF PREFERRED EMBODIMENTS

The invention provides a system and method for the simplification of data structures used for wireless communications. Wireless devices are provisioned with user applications for accessing remote services, such as World Wide Web services. The user applications are conditioned to use a simplified data structure for storing information associated with a remote service that utilizes complex data structures for conveying the information to devices that access the remote service. An algorithm processes the complex data structures to simplify them by removing structure not utilized in the wireless device.

### System Overview

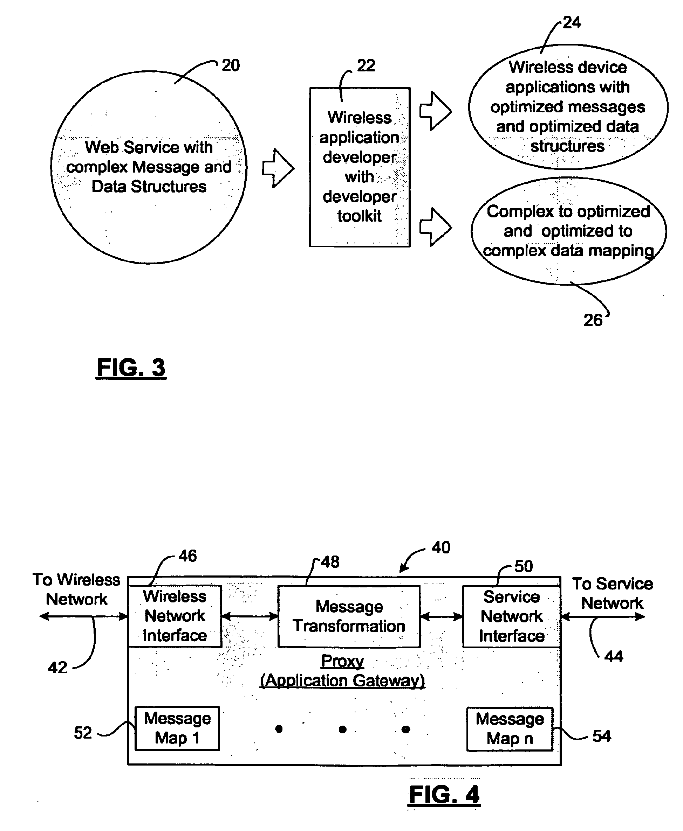

Fig. 3 is a schematic diagram illustrating a process for creating and enabling a system in accordance with the invention.

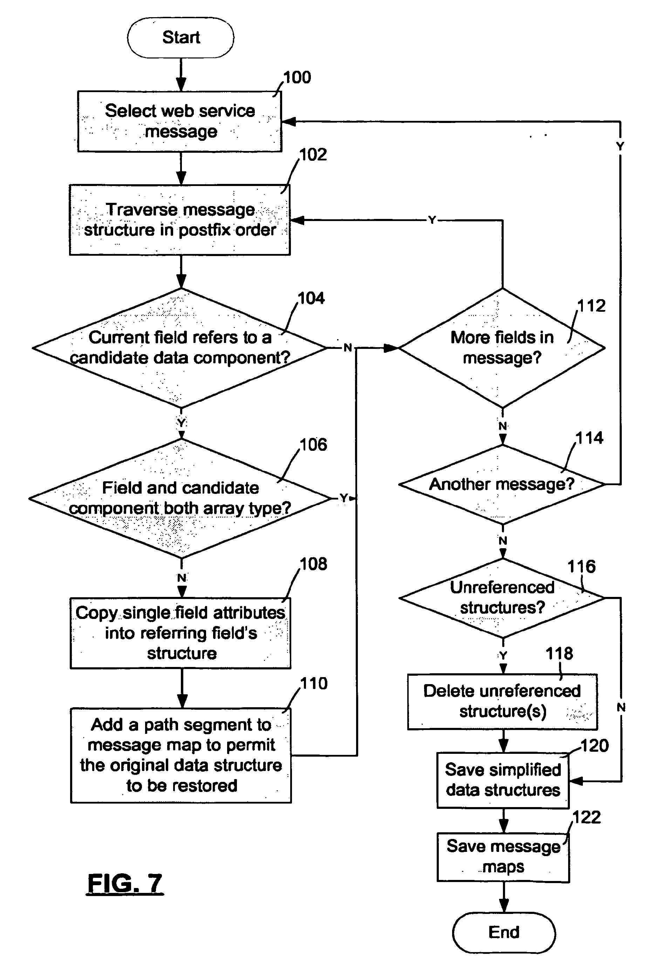

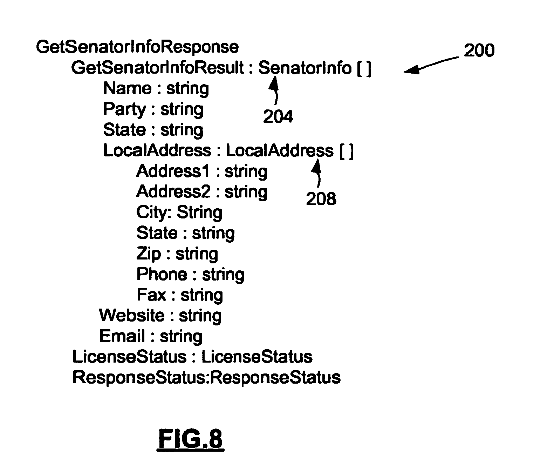

A remote service accessed by the wireless devices 10a, 10b shown in Fig. 1, such as web service 20 uses complex message structures to communicate information to users who access the remote service. The web service 20 likewise uses complex data structures for data storage and data retrieval. A wireless application developer 22 uses a specification of the web service 20 and an application developer toolkit to create wireless device applications 24 and message maps 26 for enabling a system in accordance with the invention. The wireless device applications 24 with simplified message formats and simplified data structures is created from a specification for the web service 20. As will be explained below with reference to FIG. 7, the simplified data structures are created by "flattening" data structures defined in the web service specification. The process of flattening the web service data structures involves removing any unnecessary structure from the complex data structures, such as the exemplary data structure 20 shown in FIG. 2. The flattening of the complex data structures is performed by the application developer 22 using an automated or semi-automated algorithm, as will be explained below with reference to FIGs. 7 and 8.

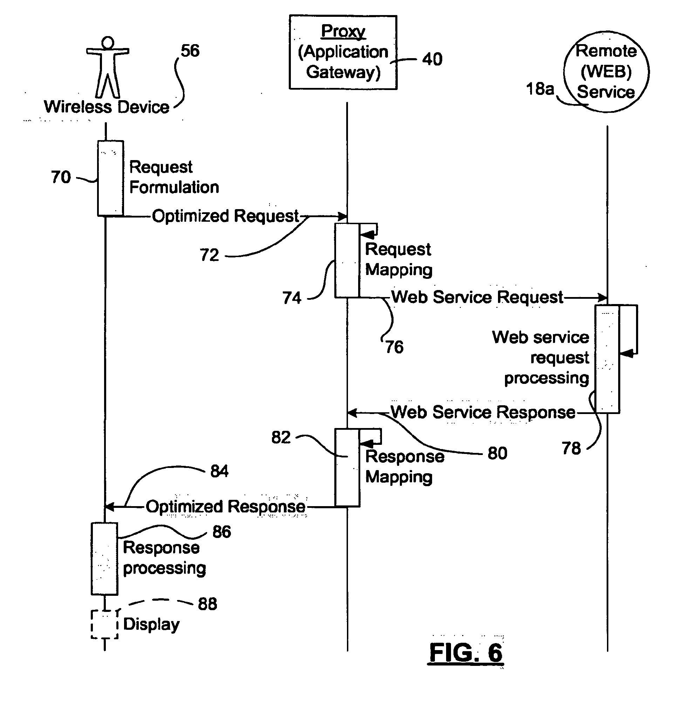

After the simplified data structures and message mapping is created for converting complex service messages to simplified wireless messages. The message mapping 26 is used by a proxy at an edge of the wireless network to convert the complex service messages to simplified wireless messages before the simplified wireless messages are sent wirelessly to the wireless device users 10a, 10b. In one embodiment of the invention the proxy that applies the data mapping 26 is an application gateway, as will be explained below with reference to Figs. 4 and 6.

FIG. 4 is a block diagram of proxy 40 in accordance with the invention. The proxy 40 is located in a communications path between the wireless device 10a, 10b and the remote service, for example, a worldwide web service 18a, 18b. In one embodiment of the invention the proxy 40 is an application gateway, and is hereinafter referred to as the application gateway 40.

The application gateway 40 supports a wireless network interface 46 having a link 42 to the wireless network. A message transformation function 48 receives messages from the wireless network interface 46 and processes the messages before forwarding the messages to a service network interface 50. The service network interface 50 has a link to a service network 44 (the Internet, for example) over which it forwards the messages to an appropriate web service(s). In accordance with the invention, the application gateway 40 is provisioned with a plurality of message maps 52, 54. The message maps 52, 54 are created by the wireless application developer 22 and used by the message transformation function 48 to process service request and service response messages, as will be explained below in more detail with reference to FIG. 6. One message map 52, 54 is created by the application developer 22 for each message type used by each web service 18a, 18b.

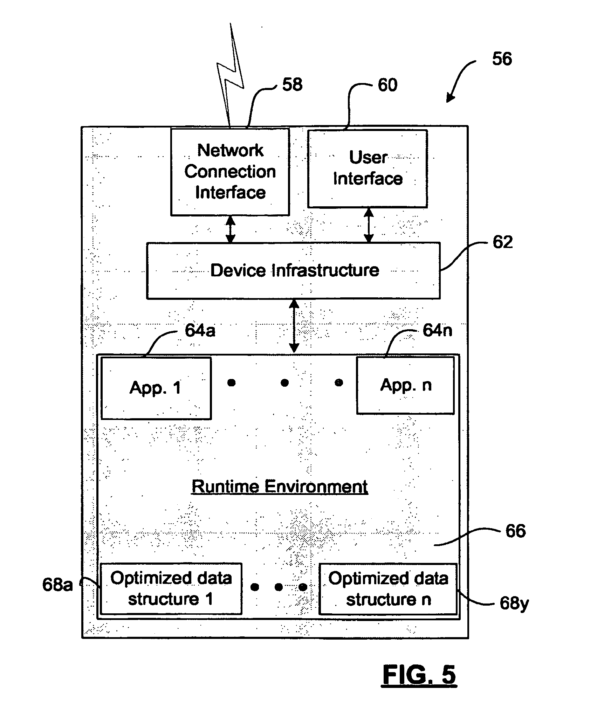

FIG. 5 is a block diagram of a wireless device 56 in accordance with the invention. The wireless device 56 includes a network connection interface 58 that is well known in the art and used to communicate wirelessly with the public domain carrier 12. The wireless device 56 further includes a user interface 60, which may be a keypad, a touch sensitive screen, voice recognition software, or any other user interface for wireless devices. A device infrastructure 62 includes memory, processor(s), peripheral ports, keypad, display and other hardware components required to support the functionality of the wireless device 56. A run time environment 66 supports a plurality of simplified (optimized) data structures 68a, 68n that store corresponding application data in the simplified data structures, such as a simplified data structure 300, which will be explained below with reference to FIG. 8.

### Operation Overview

FIG. 6 provides an overview of wireless messaging using simplified data structures in accordance with the invention. In step 70 a wireless device 10a formulates a service request message in a simplified format when a user of the wireless device 10a requests a service from web service 18a. The service request message is forwarded to the application gateway (step 72) which performs service request message mapping in step 74 to transform the service request message in the simplified format into a web service request message format required by the web service 18a. The application gateway 40 forwards the web service request message to the web service 18a (step 76), which receives the web service request message and processes the message in a manner well known in the art (step 78). The web service 18a then formulates and returns a web service response message (step 80). The application gateway 40 receives the web service response message, correlates the web service response message with the web service request message sent earlier, and performs web service response message mapping in step 82 to transform the web service response message to a response message in the simplified format used by the wireless device 10a. The application gateway 40 forwards the response message in the simplified format to the wireless device 10a in step 84. The wireless device 10a receives the service response message and performs service response message processing in step 86. The wireless device 10a may generate a display of information to the user in step 88, depending on a content of the service response message processed in step 86.

### Data Structure Simplification

FIG. 7 is a flow chart of an algorithm in accordance with the invention embodied in computer executable code for simplifying complex data structures by "flattening" the data structures. This is a post-mapping process in which general message mapping is performed in a manner that is not within the scope of the instant invention.

The algorithm shown in FIG. 7 is, for example, a part of the application developer toolkit 22 (FIG. 3). The algorithm accepts complex web service messages as input and outputs a simplified service message for wireless messaging and a message map that permits the complex web service message to be reconstructed using the simplified service message and the message map.

As shown in FIG. 7, a web service message is selected in step 100. The selected message is, for example, a web service message that contains a complex data structure as shown in FIG. 2 with several levels of nesting that tax the resources of wireless transmission systems, as well as the limited processing power and storage memory of wireless devices 10a, 10b. The selected message is traversed in postfix order and each field of the message is examined (step 102). It is determined in step 104 whether a current field being examined refers to a candidate data component that permits the message to be flattened. A field that refers to a data structure that contains only a single field is a candidate data component. If the current field does not refer to a candidate data component, the algorithm checks to determine whether there are more fields in the message (step 112) and, if so, the algorithm returns to step 102. In step 106 it is determined whether the referring field and candidate data component are both of the array type. If both the referring field and the candidate data component are of the array type, the algorithm branches to step 112, and continues as described above.

However, if both the referring field and the candidate data component are not of the array type, the algorithm copies field attributes of the candidate data component up a level into the referring field's structure. A message map 52 (FIG. 4) is then updated to add a path segment to identify the original location of the referring field (step 110). The algorithm then returns to step 112.

When the entire message has been traversed in postfix order, it is determined in step 114 whether there is another message to process. If so, the algorithm returns to step 100. If not, the simplified (flattened) service messages are examined (step 116), to determine whether any of the simplified data structures are unreferenced in the data maps. For example, as shown in FIG. 8, and as will be explained below in detail with reference to FIG. 8, after flattening the GetSenatorInfoResult field 22 (FIG. 2) is changed to an array of SenatorInfo 204 (FIG. 8). If the type ArrayOfSenatorInfo is not referenced by any of the messages in a wireless application with which the messages are associated, then the algorithm deletes the unreferenced data structure (step 118). The same applies to the ArrayOfLocalAddress type 208 (FIG. 8). After any unreferenced data structure(s) are deleted, the remaining simplified data structures are saved (step 120). All modified message maps are then saved (step 122), and the message flattening algorithm terminates.

FIG. 8 illustrates the effects of employing the algorithm shown in FIG. 7 for simplifying, i.e. flattening, a web service message that contains the complex data structure shown in FIG. 2.

FIG. 8 schematically illustrates the complex data structure 20 shown in FIG. 2 after it has been simplified by flattening. The simplified data structure 200 does not contain the referring fields "GetSenatorInfoResult" 22 or "LocalAddress" 26. Rather, the field "GetSenatorInforesult" 204 and "LocalAddress" 206 are respectively copied up into the position formally occupied by the respective referring fields 22, 26. With that exception, the simplified data structure shown in FIG. 8 is the same as the complex data structure shown in FIG. 7. Of course, as will be understood by those skilled in the art, for simplicity of illustration the exemplary data structures shown in FIGs. 2 and 8 are not necessarily representative of the complexity of data structures used by web services 18a, 18b.

As will be appreciated by those skilled in the art, the invention allows application developers to improve wireless device performance by reducing data processing overheads. It also allows application developers to reduce storage space requirements on the wireless devices 10a, 10b by reducing space-consuming complex data structures. The present invention also allows application developers to reduce bandwidth usage in the wireless leg of messaging required for accessing remote services, such as worldwide web services, while providing message maps for transparently delivering messages to the remote services in a native format that includes the complex data structures expected by the remote services.

Although the invention has been explained with explicit reference to web services, those skilled in the art will appreciate that the invention can be used to efficiently access any remote service that uses complex data structures for request/response messaging.

The embodiment(s) of the invention described above is(are) intended to be exemplary only. The scope of the invention is therefore intended to be limited solely by the scope of the appended claims.

## Claims

1. A system for simplification of a data structure (20) in wireless communications messages (72,84), comprising:
a developer toolkit (22) comprising computer executable code for accepting as input a service message (78,80) containing complex data structures (20) with multiple levels of nesting (22,26) and outputting a simplified service message containing simplified data structures (200) which contain fewer levels of nesting (204,208), and further outputting a message map for transforming the simplified service message to the complex service message, and vice versa;
**characterized in that** the computer executable code is arranged to add a path segment to the message map (52,54) to permit the input service message (76) to be restored from the simplified service message (72).

2. The system as claimed in claim 1 wherein the computer executable code is arranged to traverse the service message (78, 80) in postfix order.

3. The system as claimed in claim 2 wherein the computer executable code is arranged to determine whether each current field encountered in the postfix order traverse refers to a candidate data component (22, 26) containing a single field (24,28).

4. The system as claimed in claim 3 wherein the computer executable code is arranged to determine whether each of the current field and the candidate data component (22, 26) are of an array type.

5. The system as claimed in claim 4 wherein the computer executable code is further arranged to copy single field attributes to a position occupied by the current field if only one of the current field (22,26) and the field referred to (24,28) are of an array type.

6. The system as claimed in any one of claims 2 to 5 wherein the computer executable code is further arranged to determine whether more fields (22,24,26,28) remain to be examined in the postfix traverse.

7. The system as claimed in claim 6 wherein the computer executable code is arranged to save the simplified service messages (72,84) after all of the service messages have been examined.

8. The system as claimed in claim 7 wherein the computer executable code is further arranged to save the message maps (52,54) that permits the service messages (80) to be converted to the simplified messages (84), and vice versa.

9. A method for simplification of a data structure (20) in wireless communications messages (72,84), comprising the steps of:
provisioning the application developer toolkit (22) with computer executable code for mapping complex service messages (76,80) used by the remote service (18a.18b) to simplified wireless messages (72,84) used by the application, and the simplified wireless messages to the complex service messages; and
provisioning a proxy (40) in a communications path (42,44) between the wireless device (56) and the remote service (18a,18b) with a message map (52,54) comprising the mapped complex service messages (76,80), to permit the proxy to convert the complex service messages to the simplified wireless messages and the simplified wireless messages to the complex service messages, to enable wireless communications between the wireless device and the remote service;
**characterized in that** the method further comprises provisioning the application developer toolkit (22) with computer executable code for adding a path segment to the message map (52,54) to permit the service message (76,80) to be restored from the simplified data message (72,84).

10. The method as claimed in claim 9 further comprising provisioning the application developer toolkit (22) with computer executable code for removing nesting structure from the service messages (76,80) to output the simplified services messages (72,84).

11. The method as claimed in claim 9 or claim 10 wherein provisioning the proxy (40) comprises provisioning an application gateway to serve as the proxy.

12. The method as claimed in claim 11 wherein provisioning the application gateway (40) further comprises provisioning the application gateway with a message transformation function (48) for applying the mapping (52, 54).

13. The method as claimed in claim 12 further comprising conditioning the message transformation function (48) to apply the mapping (52,54) to the simplified wireless messages (72) to produce complex service messages (76) that are relayed via a wireline (44) to the remote service (18a,18b), and to apply the mapping to the complex service messages (80) to produce the simplified service messages (84) that are relayed wirelessly to the wireless device (56).

14. The method as claimed in any one of claims 9 to 13 further comprising provisioning the application developer toolkit (22) with computer executable code for traversing the input service message (76,80) in a postfix order to remove complex structure (22,26) from the input service messages.

15. The method as claimed in claim 14 further comprising provisioning the application developer toolkit (22) with computer executable code for examining each field (22,24,26,28) in the postfix order traverse to determine whether a current field refers (22) to a candidate data component (24).

16. The method as claimed in claim 15 further comprising provisioning the application developer toolkit (22) with computer executable code for determining whether the current field (22) and the candidate data component (24) are both fields of an array type.

17. The method as claimed in claim 16 further comprising provisioning the application developer toolkit (22) with computer executable code for copying single field attributes of the candidate data component (24) to a position occupied by the current field (22) if only one of the current field and the candidate data component are of the array type.

18. A machine readable medium comprising program code means executable on a computer having a programmable processor for implementing the method as claimed in any one of claims 9 to 17.

## Patentansprüche

1. System zur Vereinfachung einer Datenstruktur (20) in Drahtloskommunikationsnachrichten (72, 84), umfassend:
ein Entwickler-Toolkit (22), umfassend computerausführbaren Code zum Akzeptieren einer Dienstnachricht (78, 80), die komplexe Datenstrukturen (20) mit mehreren Verschachtelungsebenen (22, 26) enthält, als Eingabe und zum Ausgeben einer vereinfachten Dienstnachricht, die vereinfachte Datenstrukturen (200) mit weniger Verschachtelungsebenen (204, 208) enthält, und des Weiteren zum Ausgeben einer Nachrichtenzuordnung zum Umsetzen der vereinfachten Dienstnachricht in die komplexe Dienstnachricht und umgekehrt;
**dadurch gekennzeichnet, dass** der computerausführbare Code zum Hinzufügen eines Pfadsegments zu der Nachrichtenzuordnung (52, 54) eingerichtet ist, um die Wiederherstellung der Eingabe-Dienstnachricht (76) aus der vereinfachten Dienstnachricht (72) zu ermöglichen.

2. System gemäß Anspruch 1, wobei der computerausführbare Code zum Durchlaufen der Dienstnachricht (78, 80) in Postfix-Reihenfolge eingerichtet ist.

3. System gemäß Anspruch 2, wobei der computerausführbare Code eingerichtet ist zum Ermitteln, ob sich jedes aktuelle Feld, auf das beim Durchlauf in Postfix-Reihenfolge gestoßen wird, eine in Frage kommende Datenkomponente (22, 26) mit einem einzigen Feld (24, 28) referenziert.

4. System gemäß Anspruch 3, wobei der computerausführbare Code zum Ermitteln eingerichtet ist, ob jedes aktuelle Feld und die in Frage kommende Datenkomponente (22, 26) einem Matrixtyp entsprechen.

5. System gemäß Anspruch 4, wobei der computerausführbare Code des Weiteren eingerichtet ist zum Kopieren von Einzelfeldattributen zu einer Position, die durch das aktuelle Feld belegt ist, wenn nur eines vom aktuellen Feld (22, 26) und vom referenzierten Feld (24, 28) einem Matrixtyp entsprechen.

6. System gemäß jedem der Ansprüche 2 bis 5, wobei der computerausführbare Code des Weiteren eingerichtet ist zum Ermitteln, ob in dem Postfix-Durchlauf noch weitere zu überprüfende Felder (22, 24, 26, 28) verbleiben.

7. System gemäß Anspruch 6, wobei der computerausführbare Code eingerichtet ist zum Speichern der vereinfachten Dienstnachrichten (72, 84), nachdem sämtliche Dienstnachrichten überprüft wurden.

8. System gemäß Anspruch 7, wobei der computerausführbare Code des Weiteren eingerichtet ist zum Speichern der Nachrichtenzuordnungen (52, 54), die das Umsetzen der Dienstnachrichten (80) in die vereinfachten Dienstnachrichten (84) und umgekehrt ermöglichen.

9. Verfahren zur Vereinfachung einer Datenstruktur (20) in Drahtlos-Kommunikationsnachrichten (72, 84), umfassend die folgenden Schritte:
das Bereitstellen des Entwickler-Toolkits (22) mit computerausführbarem Code zum Zuordnen komplexer Dienstnachrichten (76, 80), die durch den Remote-Dienst (18a, 18b) verwendet werden, zu vereinfachten Drahtlosnachrichten (72, 84), die von der Anwendung verwendet werden, und der vereinfachten Drahtlosnachrichten zu den komplexen Dienstnachrichten; und
das Bereitstellen eines Proxys (40) in einem Kommunikationspfad (42, 44) zwischen dem Drahtlosgerät (56) und dem Remote-Dienst (18a, 18b) mit einer Nachrichtenzuordnung (52, 54), welche die zugeordneten komplexen Dienstnachrichten (76, 80) umfasst, um es dem Proxy zu ermöglichen, die komplexen Dienstnachrichten in die vereinfachte Drahtlosnachrichten und die vereinfachten Drahtlosnachrichten in die komplexen Dienstnachrichten umzusetzen, um die drahtlose Kommunikation zwischen dem Drahtlosgerät und dem Remote-Dienst zu ermöglichen;
**dadurch gekennzeichnet, dass** das Verfahren des Weiteren das Bereitstellen des Entwickler-Toolkits (22) mit computerausführbarem Code zum Hinzufügen eines Pfadsegments zu der Nachrichtenzuordnung (52, 54) umfasst, um die Wiederherstellung der Dienstnachricht (76, 80) aus der vereinfachten Datennachricht (72, 84) zu ermöglichen.

10. Verfahren gemäß Anspruch 9, des Weiteren umfassend das Bereitstellen des Entwickler-Toolkits (22) mit computerausführbarem Code zum Entfernen von Verschachtelungsstruktur aus den Dienstnachrichten (76, 80), um die vereinfachten Dienstnachrichten (72, 84) auszugeben.

11. Verfahren gemäß Anspruch 9 oder Anspruch 10, wobei das Bereitstellen des Proxys (40) das Bereitstellen eines Anwendungs-Gateways umfasst, welches als der Proxy dient.

12. Verfahren gemäß Anspruch 11, wobei das Bereitstellen des Anwendungs-Gateways (40) des Weiteren das Bereitstellen des Anwendungs-Gateways mit einer Umsetzungsfunktion (48) zum Anwenden der Zuordnung (52, 54) umfasst.

13. Verfahren gemäß Anspruch 12, des Weiteren umfassend das Konditionieren der Nachrichten-Umsetzungsfunktion (48) zum Anwenden der Zuordnung (52, 54) auf die vereinfachten Drahtlosnachrichten (72), um komplexe Dienstnachrichten (76) zu erzeugen, die über eine Drahtleitung an den Remote-Dienst (18a, 18b) weitergeleitet werden, und zum Anwenden der Zuordnung auf die komplexen Dienstnachrichten (80), um die die vereinfachten Dienstnachrichten (84) zu erzeugen, die drahtlos zu dem Drahtlosgerät (56) weitergeleitet werden.

14. Verfahren gemäß jedem der Ansprüche 9 bis 13, des Weiteren umfassend das Bereitstellen des Anwendungsentwickler-Toolkits (22) mit computerausführbarem Code zum Durchlaufen der Eingabe-Dienstnachricht (76, 80) in einer Postfix-Reihenfolge, um komplexe Struktur (22, 26) aus den Eingabe-Dienstnachrichten zu entfernen.

15. Verfahren gemäß Anspruche 14, des Weiteren umfassend das Bereitstellen des Anwendungsentwickler-Toolkits (22) mit computerausführbarem Code zum Überprüfen von jedem Feld (22, 24, 26, 28) beim Durchlauf in Postfix-Reihenfolge, um zu ermitteln, ob ein aktuelles Feld (22) eine in Frage kommende Datenkomponente (24) referenziert.

16. Verfahren gemäß Anspruch 15, des Weiteren umfassend das Bereitstellen des Anwendungsentwickler-Toolkits (22) mit computerausführbarem Code zum Ermitteln, ob das aktuelle Feld (22) und die in Frage kommende Datenkomponente (24) beides Felder eines Matrixtyps sind.

17. Verfahren gemäß Anspruch 16, des Weiteren umfassend das Bereitstellen des Anwendungsentwickler-Toolkits (22) mit computerausführbarem Code zum Kopieren von Einzelfeldattributen der in Frage kommenden Datenkomponente (24) zu einer Position, die durch das aktuelle Feld (22) belegt ist, wenn nur eines vom aktuellen Feld und von der in Frage kommenden Datenkomponente dem Matrixtyp entsprechen.

18. Maschinenlesbares Medium, das Programmcodemittel enthält, die auf einem Computer mit einem programmierbaren Prozessor ausgeführt werden können, um das Verfahren gemäß jedem der Ansprüche 9 bis 17 zu implementieren.

## Revendications

1. Un système destiné à simplifier une structure de données (20) dans des messages de communications sans fil (72, 84), comprenant :
une boîte à outils pour développeur (22) comprenant du code exécutable par ordinateur destiné à accepter en entrée un message de service (78, 80) contenant des structures de données complexes (20) avec plusieurs niveaux d'emboîtement (22, 26) et à produire un message de service simplifié contenant des structures de données simplifiées (200) qui contiennent moins de niveaux d'emboîtement (204, 208), et à produire en outre une représentation de message destinée à transformer le message de service simplifié en message de service complexe, et vice versa,
**caractérisé en ce que** le code exécutable par ordinateur est agencé de façon à ajouter un segment de trajet à la représentation de message (52, 54) afin de permettre au message de service entré (76) d'être restauré à partir du message de service simplifié (72).

2. Le système selon la Revendication 1 où le code exécutable par ordinateur est agencé de façon à faire défiler le message de service (78, 80) dans un ordre postfixé.

3. Le système selon la Revendication 2 où le code exécutable par ordinateur est agencé de façon à déterminer si chaque champ actuel rencontré dans le défilement de l'ordre postfixé se rapporte à un composant de données candidat (22, 26) contenant un champ unique (24, 28).

4. Le système selon la Revendication 3 où le code exécutable par ordinateur est agencé de façon à déterminer si chacun des champs actuels et des composants de données candidats (22, 26) sont d'un type matriciel.

5. Le système selon la Revendication 4 où le code exécutable par ordinateur est agencé en outre de façon à copier des attributs de champ unique vers une position occupée par le champ actuel si uniquement un élément parmi le champ actuel (22, 26) et le champ auquel il est fait référence (24, 28) est d'un type matriciel.

6. Le système selon l'une quelconque des Revendications 2 à 5 où le code exécutable par ordinateur est agencé en outre de façon à déterminer si d'autres champs (22, 24, 26, 28) restent à examiner dans le défilement postfixé.

7. Le système selon la Revendication 6 où le code exécutable par ordinateur est agencé de façon à sauvegarder les messages de service simplifiés (72, 84) une fois que tous les messages de service ont été examinés.

8. Le système selon la Revendication 7 où le code exécutable par ordinateur est agencé en outre de façon à sauvegarder les représentations de message (52, 54) qui permettent aux messages de service (80) d'être convertis en messages simplifiés (84) et vice versa.

9. Un procédé destiné à simplifier une structure de données (20) de messages de communications sans fil (72, 84), comprenant les opérations suivantes :
l'équipement de la boîte à outils pour développeur d'applications (22) de code exécutable par ordinateur destiné à mettre en correspondance des messages de service complexes (76, 80) utilisés par le service distant (18a, 18b) avec des messages sans fil simplifiés (72, 84) utilisés par l'application, et les messages sans fil simplifiés avec les messages de service complexes, et
l'équipement d'un serveur mandataire (40) placé sur un trajet de communication (42, 44) entre le dispositif sans fil (56) et le service distant (18a, 18b) d'une représentation de message (52, 54) comprenant les messages complexes mappés (76, 80) afin de permettre au serveur mandataire de convertir les messages de service complexes en messages sans fil simplifiés et les messages sans fil simplifiés en messages de service complexes, pour établir des communications sans fil entre le dispositif sans fil et le service distant,
**caractérisé en ce que** le procédé comprend en outre l'équipement de la boîte à outils pour développeur d'applications (22) de code exécutable par ordinateur destiné à ajouter un segment de trajet à la représentation de message (52, 54) afin de permettre au message de service (76, 80) d'être restauré à partir du message de service simplifié (72, 84).

10. Le procédé selon la Revendication 9 comprenant en outre l'équipement de la boîte à outils pour développeur d'applications (22) de code exécutable par ordinateur destiné à retirer la structure d'emboîtement des messages de service (76, 80) afin de produire les messages de service simplifiés (72, 84).

11. Le procédé selon la Revendication 9 ou 10 où l'équipement du serveur mandataire (40) comprend la mise en oeuvre d'une passerelle d'application destinée à jouer le rôle de serveur mandataire.

12. Le procédé selon la Revendication 11 où l'équipement de la passerelle d'application (40) comprend en outre l'équipement de la passerelle d'application d'une fonction de transformation de messages (48) destinée à appliquer le mappage (52, 54).

13. Le procédé selon la Revendication 12 comprenant en outre la mise en forme de la fonction de transformation de messages (48) afin d'appliquer le mappage (52, 54) aux messages sans fil simplifiés (72) afin de produire les messages de service complexes (76) qui sont relayés via un réseau filaire (44) vers le service distant (18a, 18b), et afin d'appliquer le mappage aux messages de service complexes (80) afin de produire les messages de service simplifiés (84) qui sont relayés de manière sans fil vers le dispositif sans fil (56).

14. Le procédé selon l'une quelconque des Revendications 9 à 13 comprenant en outre l'équipement de la boîte à outils pour développeur d'applications (22) de code exécutable par ordinateur destiné à faire défiler le message de service entré (76, 80) dans un ordre postfixé afin de retirer la structure complexe (22, 26) des messages de service entrés.

15. Le procédé selon la Revendication 14 comprenant en outre l'équipement de la boîte à outils pour développeur d'applications (22) de code exécutable par ordinateur destiné à examiner chaque champ (22, 24, 26, 28) dans le défilement de l'ordre postfixé afin de déterminer si un champ actuel se rapporte (22) à un composant de données candidat (24).

16. Le procédé selon la Revendication 15 comprenant en outre l'équipement de la boîte à outils pour développeur d'applications (22) de code exécutable par ordinateur destiné à déterminer si le champ actuel (22) et le composant de données candidat (24) sont tous les deux des champs d'un type matriciel.

17. Le procédé selon la Revendication 16 comprenant en outre l'équipement de la boîte à outils pour développeur d'applications (22) de code exécutable par ordinateur destiné à copier des attributs d'un champ unique du composant de données candidat (24) vers une position occupée par le champ actuel (22) si uniquement un élément parmi le champ actuel et le composant de données candidat est de type matriciel.

18. Un support lisible par ordinateur comprend un moyen à code de programme exécutable sur un ordinateur possédant un processeur programmable destiné à mettre en oeuvre le procédé selon l'une quelconque des Revendications 9 à 17.
